# EUROPÄISCHE PATENTSCHRIFT

(11) **EP 1 038 755 B1**
(45) Veröffentlichungstag und Bekanntmachung des Hinweises auf die Patenterteilung: **08.10.2003**
(21) Anmeldenummer: 00112649.9
(22) Anmeldetag: 27.07.1998
(51) Int. Cl.: B62D 7/18, F16C 33/80

(54) **Vorderachse eines Lastkraftwagens oder Omnibusses mit lenkbaren, nicht angetriebenen Rädern**
Front axle for a truck or bus with steerable non-driving wheels
Essieu avant pour un camion ou autobus à roues non motrices directrices

(30) Priorität: 01.09.1997 DE 19738113
(43) Veröffentlichungstag der Anmeldung: 27.09.2000
(62) Teilanmeldung aus: 98113990.0
(73) Patentinhaber: MAN Nutzfahrzeuge Aktiengesellschaft, 80976 München (DE)
(72) Erfinder: Diehl, Ernst-Ludwig, Dipl.-Ing., 81247 München (DE); Greinöcker, Wolfgang, Dipl.-Ing. (FH), 85551 Kirchheim (DE)

(56) Entgegenhaltungen:
- WO-A-97/13674
- DE-A- 2 751 704

## Beschreibung

Die Erfindung betrifft eine Vorderachse eines Lastkraftwagens oder Omnibusses mit Merkmalen entsprechend dem Oberbegriff des Anspruchs 1. Diese ist in WO-9713674 offenbart.

Bei gebauten Vorderachsen von schweren Serien-Nutzfahrzeugen mit Merkmalen der gattungsgemäßen Art stellt sich das Problem, dass die Achsschenkel-/Achsschenkelbolzenlagerung aufgrund der gegebenen Konstruktion nicht wartungsfrei ist, sondern nach einer bestimmten Fahrzeit bzw. Kilometerleistung des Fahrzeugs gezielt überprüft und nachgeschmiert werden muss. Falls dieses Nachschmieren unterlassen oder vergessen wird, können Lagerschäden auftreten. Dies kann sogar soweit führen, dass ganze Lagerbaugruppen ausgewechselt werden müssen.

Es ist daher Aufgabe der Erfindung, eine Vorderachse der gattungsgemäßen Art mit einer solchen Achsschenkel-/Achsschenkelbolzenlagerung auszustatten, die zumindest teilweise ohne Nachschmierung auskommt und eine extrem hohe Fahrzeit bzw. Kilometerleistung ohne Schaden zu nehmen ermöglicht.

Diese Aufgabe ist bei einer Vorderachse der gattungsgemäßen Art erfindungsgemäß durch eine wartungsfreie Ausgestaltung der unteren Lagerstelle der Achsschenkel-/Achsschenkelbolzenlagerung mit Merkmalen der im Kennzeichen des Anspruchs 1 angegebenen Art gelöst.

Vorteilhafte Weiterbildungen bzw. Details der erfindungsgemäßen Lösung sind in den Unteransprüchen angegeben.

Dadurch, dass der Innenraum der unteren Lagerstelle unten durch ein in der unteren Lagerbohrung des Achsschenkels benachbart zur unteren Stirnfläche des Achsschenkelbolzens angeordnetes Organ dicht verschlossen ist, wird jegliches Vordringen von Schmutz und Wasser von axial außen her zum Nadellager und dessen Laufflächen am Achsschenkelbolzen wirksam verhindert. Da der Innenraum der unteren Lagerstelle außerdem oben durch eine Gummilippendichtung und eine zusätzliche Labyrinthdichtung zum Achskörper hin abgedichtet ist, wird auch einem radialen Vordringen von Schmutz und Wasser zwischen den parallelen Kontaktflächen des Achskörpers und Achsschenkel-Maules wirksam vorgebeugt. Da somit der Innenraum der unteren Lagerstelle hermetisch nach außen abgeschottet ist, genügt es, diesen Lagerinnenraum bzw. die dort gegebenen Freiräume nach dem Zusammenbau der Achse einmal mit Schmierfett auszufüllen. Dieses behält, weil es nicht verunreinigt werden kann, über die gewünschte Standzeit oder gar die gesamte Lebensdauer des Fahrzeugs seine volle Schmierwirkung, mit der Folge, dass die Achsschenkel/Achsschenkelbolzenlagerung zumindest im Bereich der unteren Lagerstelle praktisch über die gesamte Standzeit ihren hohen Lagerungsstandard beibehält.

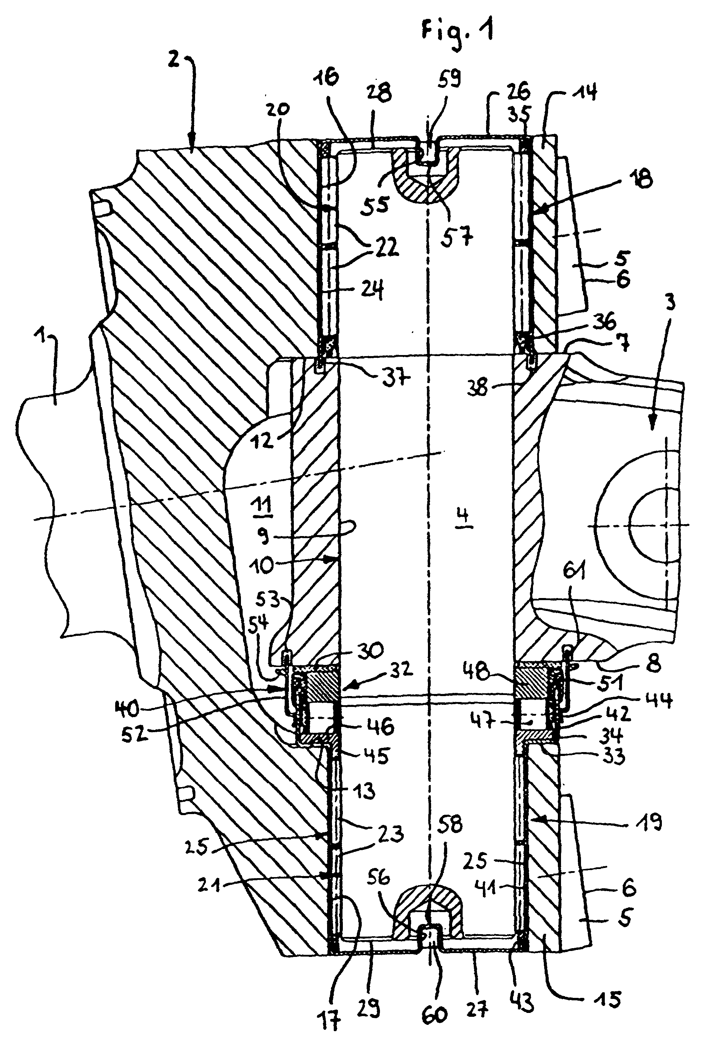

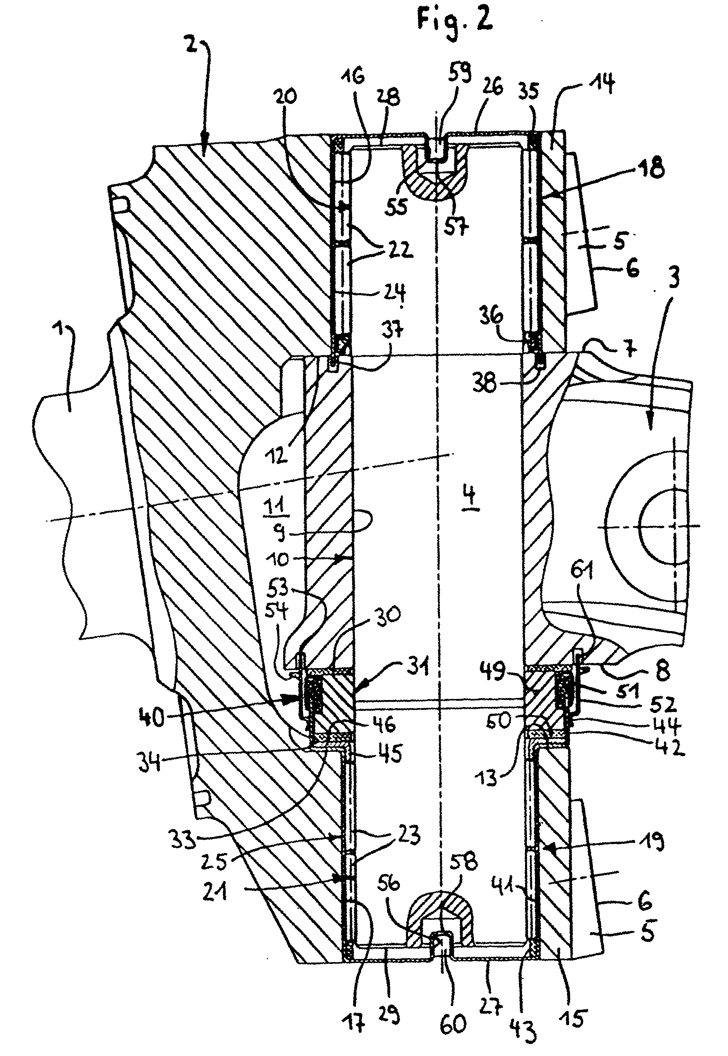

Nachfolgend ist die erfindungsgemäße Lösung anhand zweier in Fig. 1 und 2 der Zeichnung dargestellter Ausführungsbeispiele noch näher erläutert. Dabei sind in den beiden Figuren gleiche bzw. einander entsprechende Bauteile mit gleichem Bezugszeichen angezogen und von der Vorderachse eines schweren Lastkraftwagens jeglicher Bau- und Einsatzart oder eines Omnibusses nur jene Abschnitte dargestellt, die für das Verständnis der Erfindung erforderlich sind.

Die lenkbaren, nichtangetriebenen (nicht dargestellten) Räder der Vorderachse sind auf Lagerzapfen 1 von Achsschenkeln 2 gelagert, die am starren Achskörper 3 schwenkbar über Achsschenkelbolzen 4 angelenkt sind. An den Achsschenkeln 2 sind an geeigneten Stellen Mittel, wie Vorsprünge 5 mit Anschlussflächen 6, vorgesehen, an denen Lenkungsorgane angeschlossen sind (nicht dargestellt), mit denen die Lenkbewegung vom Lenkrad des Fahrzeugs mittelbar auf die Achsschenkel 2 übertragbar ist.

Der starre Achskörper 3 weist an jedem seiner beiden Enden eine obere Stützfläche 7, eine hierzu parallele untere Stützfläche 8 sowie eine hierzu senkrecht stehende Durchgangsbohrung 9 auf, in die ein Achsschenkelbolzen 4 mit seinem Mittelabschnitt 10 eingepasst ist. Der Achsschenkel 2 weist ein Maul 11 auf, das oben durch eine ebene Fläche 12 und unten durch eine hierzu parallele Fläche 13 begrenzt wird und in das der Achskörper 3 hineinragt. Außerdem sind im Achsschenkel 2 in den beiderseits des Maules 11 vorhandenen Abschnitten 14, 15 axial zueinander fluchtende sowie senkrecht zu den Flächen 12, 13 stehende Lagerbohrungen 16, 17 gegeben, in deren jeweiligem Bereich die obere Lagerstelle 18 bzw. untere Lagerstelle 19 für den darin mit seinem oberen Zapfenabschnitt 20 bzw. unteren Zapfenabschnitt 21 gelagerten Achsschenkelbolzen 4 angeordnet ist.

Die untere Lagerstelle 19, vorzugsweise aber auch die obere Lagerstelle 18 je Achsschenkel 2 bzw. Achsschenkelbolzen 4 ist für wartungsfreien Betrieb ausgelegt. Im Rahmen dieses Patentes wird als erfindungsgemäß nur die wartungsfreie Ausgestaltung der Achsschenkel-/Achsschenkelbolzenlagerung im Bereich der unteren Lagerstelle 19 betrachtet.

Jede der beiden Lagerstellen 18, 19 weist jeweils ein insbesondere zweireihiges Nadellager 22 bzw. 23 auf, das von einer äußeren Hülse 24 bzw. 25 umfasst wird, die in die betreffende Lagerbohrung 16 bzw. 17 des Achsschenkels 2 angepasst ist. Die Rollen der Nadellager 22 bzw. 23 stehen dabei innen mit dem Zapfenabschnitt 20 bzw. 21 am Achsschenkelbolzen 4 und außen mit der Innenfläche der Hülse 24 bzw. 25 in Abrollkontakt.

In Anbaulage übergreift der Achsschenkel 2 mit seinem Maul 11 den endseitigen Anschlussbereich des Achskörpers 3. Dabei steht der Achskörper 3 mit seiner oberen Stirnfläche 7 in Gleitkontakt mit der oberen Begrenzungsfläche 12 des Achsschenkel-Mauls 11. Mit seiner unteren Stützfläche 8 dagegen ist der Achskörper 3 - erforderlichenfalls unter Zwischenschaltung wenigstens einer Axialtoleranzen ausgleichenden Passringscheibe 30 - über ein Axialgleitlager 31 (siehe Fig. 2) oder ein Axialrollenlager 32 (siehe Fig. 1) und den Boden 33 einer dieses Lager 31 bzw. 32 aufnehmenden Erweiterung 34 der Hülse 25 der unteren Lagerstelle 19 an der unteren Begrenzungsfläche 13 des Achsschenkel-Mauls 11 abgestützt.

Die beiden Hülsen 24 bzw. 25 können, müssen aber nicht notwendigerweise topfförmig ausgebildet sein. Im Falle ihrer topfförmigen Ausbildung weist jede der Hülsen 24 bzw. 25 einen Boden 26 bzw. 27 auf, der die benachbarte Stirnfläche 28 bzw. 29 des Achsschenkelbolzens 4 überdeckt. Sofern die Hülsen 24, 25 nicht einstückig topfförmig ausgebildet sind, das heißt, die Böden 26, 27 nicht einstückig mit ihnen ausgebildet sind, muss die die jeweilige Hülse 24 bzw. 25 aufnehmende Lagerbohrung 16 bzw. 17 durch ein anderes, dem Boden 26 bzw. 27 adäquates Organ dicht verschlossen sein. Dies kann ein Deckel oder eine Haube sein, die in den äußeren Endbereich der jeweiligen Lagerbohrung 16 bzw. 17 eingesetzt ist und letztere somit dicht verschließt.

In den dargestellten Beispielen ist die Hülse 24 der oberen Lagerstelle 18 topfförmig ausgebildet und vorzugsweise durch ein einstückiges Tiefziehteil aus Stahlblech realisiert, das an bestimmten Stellen - soweit notwendig - spanabhebend nachbearbeitet ist. Der Boden 26 dieser Hülse 24 ist in Einbaulage um ein gewisses Maß, z. B. 1 bis 2 mm, von der benachbarten Stirnfläche 28 des Achsschenkelbolzens 4 beabstandet, wobei diese Distanz durch einen sich an der oberen Reihe von Rollen des Nadellagers 22 und innenseitig des Hülsen-Bodens 26 abstützenden Distanzring 35 erhalten bleibt.

Mit 36 ist eine den Innenraum der Hülse 24 der oberen Lagerstelle 18 zum Achskörper 3 hin abdichtende Gummilippendichtung bezeichnet, die durch eine Metalleinlage armiert ist und sich im Anschluss an die untere Reihe von Rollen des Nadellagers 22 mit ihren Dichtlippen dichtend an die zylindrische Innenfläche der Hülse 24, die Außenfläche des oberen Zapfenabschnitts 20 des Achsschenkelbolzens 4 und die obere Stützfläche 7 am Achskörper 3 anlegt. Darüber hinaus kann der Innenraum der oberen Lagerstelle 18 auch noch durch eine Labyrinthdichtung abgedichtet sein. Diese ist dadurch realisiert, dass die topfförmige Hülse 24 mit ihrem unteren Randbereich 37 in den Bereich des Achsschenkel-Maules 11 hinein verlängert ist und dort in eine die obere Stützfläche 7 des Achskörpers 3 axial hinterschneidende Ringnut 38 eintaucht. Diese ist so groß bemessen ist, daß sie den eintauchenden Randbereich 37 der Hülse 24 innen, außen und stirnseitig mit Abstand umgibt und so ein Ringkanal mit einem nach oben offenen U-Querschnitt verbleibt, der das dichtende Labyrinth bildet.

Die Hülse 25 der unteren Lagerstelle 19 ist mit ihrer zylindrischen Wand 41 und der Erweiterung 34 mit deren Boden 33 und zylindrischer Außenwand 42 einstückig, vorzugsweise durch ein Tiefziehteil aus Stahlblech, realisiert, das - soweit notwendig - an bestimmten Stellen spanabhebend nachbearbeitet ist. Mit 40 ist eine Schiebemuffe bezeichnet, die beispielsweise aus Kunststoff oder ebenfalls aus Stahlblech durch Tiefziehen hergestellt ist und, mit einem zylindrischen Führungsabschnitt mit Friktion vorzugsweise auf der zylindrischen Außenwand 42 der Erweiterung der Hülse 25 sitzend, längs derselben axial verschiebbar ist.

Bei den dargestellten Ausführungsbeispielen sind die innerhalb der unteren Lagerstelle 19 beiden Reihen von Rollen des Nadellagers 23 zwischen dem unteren Distanzring 43 und dem Axialringbund 45 einer Lagerringscheibe 46 aufgenommen. Diese bildet gemäß Fig. 2 ein Teil des Axialgleitlagers 31 und gemäß Fig. 1 ein Teil des Axialrollenlagers 32. Letzteres weist Zylinder- oder Kegelrollen 47 auf, die zwischen der Lagerringscheibe 46 und einer weiteren Lagerringscheibe 48 aufgenommen sind. Das Axialgleitlager 31 gemäß Fig. 2 dagegen besteht aus einem Druckring 49, der sich gleitfähig auf einer Lagerringscheibe 50 und über diese auf der Lagerringscheibe 46 abstützt. Auf der Oberseite des jeweiligen Lagers 31 bzw. 32 ist der Achskörper 3 unter Zwischenschaltung der wenigstens einen Passringscheibe 30 abgestützt.

Der Innenraum der unteren Lagerstelle 19 ist oben zum Achskörper 3 hin - wie nachfolgend dargelegt - abgedichtet. Zum einen ist eine Gummilippendichtung 51 vorgesehen, die den oberen freien Rand der zylindrischen Außenwand 42 der Erweiterung 34 der Hülse 25 umgreift und mit ihren Dichtlippen den Innenraum der Hülse 25 sowie das Axialgleit- oder -rollenlager 31 bzw. 32 zu der Passringscheibe 30 oder der unteren Stützfläche 8 am Achskörper 3 hin abdichtet. Die zum anderen vorgesehene Labyrinthdichtung ist dadurch realisiert, dass der obere freie Endbereich der Hülse 25 einschließlich der Gummilippendichtung 51 von der Schiebemuffe 40 übergriffen wird und diese mit dem oberen Endabschnitt 61 ihrer zylindrischen Außenwand 52 in den Bereich des Achsschenkel-Mauls 11 hinein verlängert ist und dort in eine Ringnut 53 eintaucht, die im Achskörper 3, dessen untere Stützfläche 8 axial hinterschneidend, eingearbeitet ist. Diese Ringnut 53 übergreift den eintauchenden Randbereich 61 der Schiebemuffe 40 innen, außen und stirnseitig mit solchem Abstand, dass sich ein Ringkanal mit einem nach unten offenen U-Querschnitt ergibt, der das dichtende Labyrinth bildet.

An der Schiebemuffe 40 ist ein Anschlag z. B. in Form eines Bundes bzw. Ringvorsprungs 54 vorgesehen, der - mit einer Gegenfläche, z. B. der unteren Stützfläche 8 am Achskörper, zusammenwirkend - die axiale Eindringtiefe der Schiebemuffe 40 in die Ringnut 53 begrenzt.

Die Schiebemuffe 40 wird bei der Montage des Achsschenkels 2 und Achsschenkelbolzens 4 zunächst in eine nach unten geschobene Vormontageposition gebracht, in der sie noch nicht in die Ringnut 53 eintaucht, sondern mit ihrem oberen Rand 61 ein gewisses Maß von der unteren Achskörper-Stützfläche 8 beabstandet ist. Dadurch ist es möglich, wenn das Axialgleit- bzw. -rollenlager 31 bzw. 32 sich in Endeinbaulage befindet, den toleranzbedingten Spalt zwischen Lageroberseite und unterer Achskörper-Stützfläche 8 mit einer gegebenenfalls aus mehreren Einzelscheiben zusammengesetzten Passringscheibe 30 auszufüllen, deren Dicke sich aus der messtechnisch festgestellten Spalthöhe ergibt. Am Ende der Montagemaßnahmen wird die Schiebemuffe 40 in ihre Labyrinthdichtungs-Funktionslage, also eingetaucht in die Ringnut 53, verschoben.

Für die Einbringung von Schmierfett in den Innenraum und die dort gegebenen Freiräume der oberen und unteren Lagerstelle 18 bzw. 19 ist an deren äußeren Verschluss-Organen 26 bzw. 27 vorzugsweise zentral eine Vertiefung 55 bzw. 56 vorgesehen, an der ein Schmiernippel ansetzbar ist. Die Vertiefung 55 bzw. 56 weist eine Durchgangsbohrung 57 bzw. 58 für die Durchleitung des Schmiermittels auf. Diese Schmiermitteleinbringung erfolgt wegen der Wartungsfreiheit der erfindungsgemäßen Lagerung nur einmalig nach Beendigung des Anbaus des Achsschenkels 2 am Achskörper 3. Anschließend werden die Vertiefungen 55 bzw. 56 durch Blindstopfen 59 bzw. 60 verschlossen.

## Patentansprüche

1. Vorderachse eines Lastkraftwagens oder Omnibusses mit lenkbaren, nichtangetriebenen Rädern auf Achsschenkeln (2), die schwenkbar am Starrachskörper (3) angelenkt sind über Achsschenkelbolzen (4), von denen jeder mit seinem oberen und unteren Zapfenabschnitt (20, 21) im Bereich einer oberen und unteren Lagerstelle (18, 19) jeweils über wenigstens ein Lager (22, 23) in einer Lagerbohrung (16, 17) des Achsschenkels (2) gelagert und mit seinem Mittelabschnitt (10) in eine achskörperinterne Bohrung (9) eingepasst ist, wobei der Achskörper (3) jeweils endseitig oben und unten zueinander parallele Stützflächen (7, 8) aufweist, mit denen er im Maul (11) des Achsschenkels (2) in Bezug auf dort gegebene korrespondierende Gegenflächen (12, 13) axial abgestützt eingepasst ist, **dadurch gekennzeichnet, dass** die Achsschenkel-/Achsschenkelbolzenlagerung im Bereich der unteren Lagerstelle (19) wartungsfrei ausgebildet ist und hierfür eine ein insbesondere zweireihiges Nadellager (23) außen umfassende Hülse (25) vorgesehen ist, die in die untere Lagerbohrung (17) des Achsschenkels (2) eingepasst ist und außerdem an ihrem dem Achskörper zugewandten oberen Endbereich eine Erweiterung (34) aufweist, mit deren Boden (33) sie axial an einer unteren Begrenzungsfläche (13) des Achsschenkel-Mauls (11) abgestützt ist und in deren Innenraum bodenseitig abgestützt ein Axialgleit- oder Axialrollenlager (31, 32) eingebaut ist, an dem - gegebenenfalls unter Zwischenschaltung wenigstens einer Axialtoleranzen ausgleichenden Passringscheibe (30) - der Achskörper (3) mit seiner unteren Stützfläche (8) zum Achsschenkel (2) hin abgestützt ist, und dass der Innenraum der unteren Lagerstelle 19 unten durch ein in der unteren Lagerbohrung (17) des Achsschenkels (2) benachbart zur unteren Stirnfläche (29) des Achsschenkelbolzens (4) angeordnetes Organ (27) dicht verschlossen und oben zum Achskörper (3) hin durch eine Gummilippendichtung (51) sowie eine zusätzliche Labyrinthdichtung abgedichtet ist, die durch eine an der Hülse (25) längs der Außenwand (42) von deren Erweiterung (34) axial verschiebbar angeordnete und in eine achskörperseitige Ringnut (53) eintauchende Schiebemuffe (40) gebildet ist.

2. Vorderachse nach Anspruch 1, **dadurch gekennzeichnet, dass** die Hülse (25) der unteren Lagerstelle (19) mit ihrer zylindrischen Wand (41) und der Erweiterung (34) mit deren Boden (33) und zylindrischer Außenwand (42) einstückig aus Stahlblech durch Tiefziehen hergestellt und - soweit notwendig - an bestimmten Stellen spanabhebend nachbearbeitet ist.

3. Vorderachse nach Anspruch 1, **dadurch gekennzeichnet, dass** die Schiebemuffe (40) einstückig beispielsweise aus Kunststoff oder durch Tiefziehen aus Stahlblech hergestellt ist.

4. Vorderachse nach Anspruch 1, **dadurch gekennzeichnet, dass** die Schiebemuffe (40) mit einem zylindrischen Führungsabschnitt (44) mit Friktion auf der zylindrischen Außenwand (42) der Erweiterung (34) an der Hülse (25) sitzt und längs desselben axial verschiebbar ist.

5. Vorderachse nach Anspruch 1, **dadurch gekennzeichnet, dass** der obere freie Randbereich der Außenwand (42) der Erweiterung (34) an der Hülse (25) von der Gummilippendichtung (51) umgriffen ist und diese mit ihren Dichtlippen den Innenraum der Hülse (25) und das Axialgleit- oder -rollenlager (31, 32) zu der Passringscheibe (30) oder der unteren Achskörper-Stützfläche (8) hin abdichtet.

6. Vorderachse nach Anspruch 1, **dadurch gekennzeichnet, dass** der obere freie Endbereich der Erweiterung (34) einschließlich der diesen umgreifenden Gummilippendichtung (51) von der Schiebemuffe (40) übergriffen ist.

7. Vorderachse nach Anspruch 1, **dadurch gekennzeichnet, dass** zur Realisierung der Labyrinthdichtung die Schiebemuffe (40) mit ihrem oberen Endabschnitt (61) in das Maul (11) des Achsschenkels (2) hinein verlängert ist und dabei in die die untere Achskörper-Stützfläche (8) hinterschneidende Ringnut (53) eintaucht, welche den oberen ringzylindrischen Randbereich (61) der Schiebemuffe (40) innen, außen und stirnseitig mit solchem Abstand übergreift, dass ein Ringkanal mit nach unten offenem U-Querschnitt verbleibt, der das dichtende Labyrinth bildet.

8. Vorderachse nach Anspruch 7, **dadurch gekennzeichnet, dass** an der Schiebemuffe (40) ein Anschlag z. B. in Form eines Bundes bzw. umlaufenden Ringvorsprungs (54) vorgesehen ist, der - mit einer Gegenfläche, z. B. der unteren Stützfläche (8) am Achskörper (3) zusammenwirkend - die axiale Eintauchtiefe der Schiebemuffe (40) in die Ringnut (53) begrenzt.

## Claims

1. Front axle of a motor-driven truck or omnibus with steerable, non-powered wheels on steering knuckles (2) carried on the rigid axle body (3) on pivoting kingpins (4), the top and bottom stubs (20, 21) of each of which are mounted in at least one bearing (22, 23) at upper and lower bearing points (18, 19) in a bearing bore (16, 17) of the steering knuckle (2) and having a centre section (10) passing as a fit through an internal bore (9) in the axle body (3), said axle body (3) having supporting faces (7, 8) parallel to each other at top and bottom at each end and fitting in such a way as to provide axial support in the mouth (11) of the steering knuckle (2) against the corresponding mating faces (12, 13) of said mouth, **characterised in that** the steering knuckle/kingpin bearing assembly is of maintenance-free design at the lower bearing point (19), having for this purpose an outer sleeve (25) enclosing in particular a two-row needle bearing (23), said sleeve (25) being fitted in the lower bearing bore (17) of the steering knuckle (2) and having, moreover, at the top end facing toward the axle body a projection (34), the base (33) of which supports it axially against a bottom limiting face (13) of the steering-knuckle mouth (11) and in the interior of which and supported on the base is fitted a axial plain bearing or axial roller bearing (31, 32), on which and with the inclusion, if applicable, of at least one shim (30) to compensate for axial tolerances, the axle body (3) is supported by its bottom supporting face (8) on the steering knuckle (2) and that the cavity in the lower bearing point (19) is sealed at the bottom by an element (27) in the bottom bearing bore (17) of the steering knuckle (2) adjacent to the bottom end face (29) of the kingpin (4) and at the top against the axle body (3) by a rubber-lip sealing ring (51) and an additional controlled-gap labyrinth seal formed by a sliding sleeve (40) axially displaceable by the projection (34) on the sleeve (25) along the outer wall (42) and projecting on the axle-body side into an annular groove (53).

2. Front axle according to Claim 1, **characterised in that** the sleeve (25) of the lower bearing point (19) with its cylindrical wall (41) and projection (34) with its base (33) and cylindrical outer wall (42) is a one-piece deep-drawn sheet-steel part post-machined - insofar as necessary - in certain areas by chip-removal processes.

3. Front axle according to Claim 1, **characterised in that** the sliding sleeve (40) is manufactured in one piece from plastic, for example, or from sheet steel by deep-drawing.

4. Front axle according to Claim 1, **characterised in that** a cylindrical guide section (44) of the sliding sleeve (40) is seated by friction on the cylindrical outer wall (42) of the projection (34) on the sleeve (25) and is axially displaceable thereon.

5. Front axle according to Claim 1, **characterised in that** the upper free edge zone of the outer wall (42) of the projection (34) on the sleeve (25) is enclosed around its circumference by the rubber-lip sealing ring (51), which, by means of its sealing lips, seals the inner cavity of the sleeve (25) and the axial plain bearing or axial roller bearing (31, 32) against the shim (30) or the bottom axle-body supporting face (8).

6. Front axle according to Claim 1, **characterised in that** the top free end zone of the projection (34), including the rubber-lip sealing ring (51) which encloses it, is enclosed by the sliding sleeve (40).

7. Front axle according to Claim 1, **characterised in that** to realise the controlled-gap labyrinth seal, the top end section (61) of the sliding sleeve (40) extends into the mouth (11) of the steering knuckle (2), thereby projecting into the annular groove (53) back-cutting into the bottom axle-body supporting face (8) which groove (53) encloses the upper ring-cylindrical edge zone (61) of the sliding sleeve (40) on the inside, outside and at the end face with clearance such that an annular channel with an inverted U cross-section remains, said annular channel forming the sealing labyrinth.

8. Front axle according to Claim 7, **characterised in that** the sliding sleeve (40) evinces a stop, for example in the form of a collar or an external, circumferential annular protrusion (54) which - together with a mating face, for example the bottom supporting face (8) of the axle body (3) - limits the extent of axial projection of the sliding sleeve (40) into the annular groove (53).

## Revendications

1. Essieu avant d'un camion ou d'un autocar ou autobus à roues directrices non motrices sur fusées (2) articulées sur le corps d'essieu rigide (3) par l'intermédiaire de pivots (4), dont chacun est monté par ses tourillons supérieur et inférieur (20, 21), dans la plage de paliers supérieur et inférieur (18, 19), dans un alésage (16, 17) de la fusée (2) par l'intermédiaire d'au moins un coussinet (22, 23) et dont la partie médiane (10) est ajustée dans un alésage (9) interne au corps d'essieu (3), le corps d'essieu (3) présentant à ses extrémités supérieure et inférieure des portées parallèles (7, 8) par lesquelles il est ajusté en appui axial dans la mâchoire (11) de la fusée (2) par rapport à des portées associées (12, 13) disposées à ce niveau, **caractérisé en ce que** l'assemblage fusée/ pivot ne nécessite aucun entretien au niveau du palier inférieur (19) et qu'il est prévu à cet effet une douille (25) emprisonnant un coussinet à aiguilles (23), en particulier à double rangée d'aiguilles, laquelle douille (25) est ajustée dans l'alésage inférieur (17) de la fusée (2) et présente en outre à son extrémité supérieure opposée au corps d'essieu une extension (34) par le fond (33) de laquelle elle s'appuie axialement sur une face de limitation inférieure (13) de la mâchoire (11) de la fusée et à l'intérieur de laquelle est ajusté en appui sur le fond un palier axial lisse ou à rouleaux (31, 32) sur lequel - le cas échéant avec intercalage d'au moins une rondelle de compensation des tolérances axiales (30) - s'appuie le corps d'essieu (3) par sa portée inférieure (8) en direction de la fusée (2), et que l'intérieur du palier inférieur (19) est hermétiquement fermé en bas par un organe (27) disposé dans l'alésage inférieur (17) de la fusée (2), au voisinage de la face frontale inférieure (29) du pivot (4), et est rendu étanche en haut, en direction du corps d'essieu (3), par un joint à lèvres en caoutchouc (51) ainsi que par un joint additionnel à labyrinthe constitué d'un manchon coulissant (40) disposé au niveau de la douille (25), le long de la paroi extérieure (42), pouvant coulisser axialement par rapport à l'extension (34) et pénétrant dans une rainure annulaire (53) ménagée dans le corps d'essieu.

2. Essieu avant suivant la revendication 1, **caractérisé en ce que** la douille (25) du palier inférieur (19) est fabriquée, avec sa paroi cylindrique (41) et l'extension (34) ainsi que le fond (33) et la paroi extérieure cylindrique (42) de cette dernière, d'un seul tenant par emboutissage de tôle d'acier et - si nécessaire - reprise par usinage en certains points avec enlèvement de copeaux.

3. Essieu avant suivant la revendication 1, **caractérisé en ce que** le manchon coulissant (40) est fabriqué d'un seul tenant, par exemple en matière plastique ou par emboutissage de tôle d'acier.

4. Essieu avant suivant la revendication 1, **caractérisé en ce que** le manchon coulissant (40) est monté avec friction, par une section de guidage cylindrique (44), sur la paroi extérieure cylindrique (42) de l'extension (34) de la douille (25) et peut coulisser axialement le long de ladite section.

5. Essieu avant suivant la revendication 1, **caractérisé en ce que** le bord supérieur libre de la paroi extérieure (42) de l'extension (34) de la douille (25) est enveloppé par le joint à lèvres en caoutchouc (51) et que ce dernier assure par ses lèvres l'étanchéité de l'intérieur de la douille (25) et du palier axial lisse ou à rouleaux (31, 32) en direction de la rondelle (30) ou de la portée inférieure (8) du corps d'essieu.

6. Essieu avant suivant la revendication 1, **caractérisé en ce que** l'extrémité supérieure libre de l'extension (34), y compris le joint à lèvres en caoutchouc (51) qui l'enveloppe, est enserrée par le manchon coulissant (40).

7. Essieu avant suivant la revendication 1, **caractérisé en ce que** pour réaliser le joint à labyrinthe, le manchon coulissant (40) se prolonge par son extrémité supérieure (61) dans la mâchoire (11) de la fusée (2) et y pénètre dans la rainure annulaire (53) dépouillant la portée inférieure (8) du corps d'essieu, ladite rainure enserrant à l'intérieur, à l'extérieur et en bout le bord supérieur cylindrique (61) du manchon coulissant (40) à une distance telle qu'il reste un canal annulaire à section en U ouverte vers le bas, qui constitue le labyrinthe assurant l'étanchéité.

8. Essieu avant suivant la revendication 7, **caractérisé en ce qu'**il est prévu sur le manchon coulissant (40) une butée, par exemple sous forme d'une collerette ou d'un épaulement annulaire périphérique (54), qui - coopérant avec une surface antagoniste, par exemple avec la portée inférieure (8) du corps d'essieu (3) - limite la profondeur de pénétration axiale du manchon coulissant (40) dans la rainure annulaire (53).
